(19) Europäisches Patentamt
European Patent Office
Office européen des brevets

(11) Publication number: **0 293 963 B1**

(12) # EUROPEAN PATENT SPECIFICATION

(45) Date of publication of patent specification: **08.02.95**

(51) Int. Cl.6: **C08F 8/44**, C08F 8/30, C09D 127/12

(21) Application number: **88200937.6**

(22) Date of filing: **11.05.88**

(54) **Fluorocarbon-containing reactive polymeric surfactants and coating compositions therefrom and process for preparing the same.**

(30) Priority: **14.05.87 US 49490**

(43) Date of publication of application:
**07.12.88 Bulletin 88/49**

(45) Publication of the grant of the patent:
**08.02.95 Bulletin 95/06**

(84) Designated Contracting States:
**AT BE CH DE ES FR GB IT LI NL**

(56) References cited:
**EP-A- 0 182 516**
**US-A- 3 822 228**
**US-A- 4 013 627**
**US-A- 4 127 711**
**US-A- 4 592 930**

(73) Proprietor: **THE DOW CHEMICAL COMPANY**
**2030 Dow Center**
**Abbott Road**
**P.O. Box 1967**
**Midland**
**Michigan 48640-1967 (US)**

(72) Inventor: **Schmidt, Donald L.**
**2412 St. Marys Drive**
**Midland**
**Michigan 48640 (US)**
Inventor: **Coburn, Charles E.**
**5220 Hedgewood Drive No. 1012**
**Midland**
**Michigan 48640 (US)**
Inventor: **McCrackin, Perry J.**
**4512 N. Saginaw Road No. 610**
**Midland**
**Michigan 48640 (US)**

(74) Representative: **Smulders, Theodorus A.H.J., Ir. et al**
**Vereenigde Octrooibureaux**
**Nieuwe Parklaan 97**
**NL-2587 BN 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to a family of crosslinkable coating compositions comprising polymeric surfactants containing pendant fluorocarbon moieties and pendant reactive ionic moieties and polymeric crosslinking agents having an ionic moiety counterion. Such surfactants are water soluble or water dispersible and can be thermally crosslinked with loss of charge to form tough, solvent resistant, clear, low critical surface tension coatings on a variety of substrates, such as paint, plastics, metal and fabrics.

In a further aspect, the present invention is a water soluble, crosslinkable polymeric surfactant having (1) at least one pendant fluorocarbon moiety and (2) at least one pendant ionic moiety which is capable of reating with a counterion to form a crosslinked polymer.

The reactive ionic moieties on the polymeric surfactant chain can be anionic, cationic or zwitterionic (having an equivalent amount of both cationic and anionic moieties).

These three classes of polymeric surfactants are conveniently formed, for example, by: (1) polymerization of a fluoroaliphatic vinyl monomer (FAVM) with a vinyl carboxylic acid or ethylenically unsaturated carboxylic acid resulting in, after neutralization, an anionic polymeric surfactant suitable to be used in the crosslinkable coating compositions of the present invention;
(2) (a) polymerization of a fluoroaliphatic vinyl monomer (FAVM) with a vinylbenzyl chloride monomer or vinyl epoxy monomer followed by conversion to a sulfonium salt via reaction with an organic sulfide, or (b) polymerization of a FAVM with vinyl sulfonium monomer, either method thus giving cationic polymeric surfactants of the invention; or (3) polymerization of vinylbenzyl chloride monomer or vinyl epoxy monomer with an equivalent amount of a reactive unsaturated carboxylic acid and a FAVM; the benzyl chloride or the epoxide functionality of the resulting terpolymer is then converted to the sulfonium salt by reaction with a sulfide and finally to the zwitterion terpolymer suitable to be used in the crosslinkable coating compositions of the present invention by reaction of the sulfonium salt functionality with a strong base ion exchange resin. Additionally, the three classes of surfactants (anionic, cationic and zwitterionic) suitable to be used in the crosslinkable coating compositions of the present invention can be formed by post-reaction of a polymer containing reactive groups with a reactive fluorcarbon-containing moiety to introduce fluorocarbon groups.

The anionic or cationic polymer surfactants suitable to be used in the crosslinkable coating compositions of the present invention can be crosslinked by external crosslinking agengts. An external crosslinking agent is a polyfunctional compound having ionic moiety counterions capable of reacting with the reactive ionic moiety of the surfactant. These external crosslinking agents contain charged or potentially charged (e.g., when the crosslinker is protonated) groups with the charge opposite to the reactive polymer being crosslinked. The zwitterionic polymeric surfatants are self crosslinking and do not require an external crosslinking agent.

These reactive polymeric surfactants are polyelectrolytes that contain pendant fluoroaliphatic groups. When added to a compatible solvent, the polymeric surfactant lowers the surface tension or surface free energy of the liquid-gas interface, $\gamma_{LG}$. The surfactants generally lower the surface tension of water to less than 600 µN/cm (60 dynes/cm), preferably less than 400 µN/cm (40 dynes/cm). These surfactants also have the advantage of increasing the spreading coefficient, $S_{LS}$, and thus increase wetting. For a liquid to wet, the $S_{LS}$ must be positive

$$\mathbf{S_{LS} = \gamma_{SG} - \gamma_{LG} - \gamma_{SL}}$$

wherein $\gamma_{SG}$ is the surface free energy of the solid-gas interface and $\gamma_{SL}$ is the surface free energy of the solid-liquid interface. These reactive polymeric surfactant formulations wet most substrates and thus have the advantage of producing thin, flat, glossy, adherent films. Some of these substrates are paints, metals, glass, fabrics and polymers such as polystyrene and polycarbonate. The films can be cured to produce a tough, solvent resistant, low critical surface tension ($\gamma_c$), crosslinked coating. The resultant coatings generally have a critical surface tension of less than 190 µN/cm (19 dynes/cm), preferably less than 150 µN/cm (15 dynes/cm). For further discussion of critical surface tension see W.A. Zisman, Adv. Chem., Ser., No. 43 (1964).

Applications for these crosslinkable polymeric surfactants and the resulting coating compositions include, for example, automotive protective finishes and glazes, anti-soiling carpet and fabric treatments, protective coatings for building walls and other construction surfaces, mold release coatings, fly fishing line coatings and wound dressings.

An important advantage of this system is that thin, flat, continuous coatings can be obtained. The surfactant molecule which causes the liquid formulation to level becomes, with loss of charge, the major part of the final coating. Polymer surfaces, such as polystyrene, polymethylmethacrylate and polycarbonate,

are wet by these solutions. Another advantage is these coating formulations are water soluble or water dispersible. Thus, they form homogeneous, thermodynamically stable, micellar, soluble coating formulations. These coatings can be utilized and applied without an organic co-solvent.

(Water-soluble) resins having pendant anionic groups are known from e.g. US-A-3 822 228; US-A-4 013 627; EP-A-0 182 516; US-A-4 127 711 and US-A-4 592 930. However, combinations of cationic pendant groups bearing polymers and crosslinking agent, which can give a coating having the advantages of the present invention are not disclosed or suggested. More specifically, the invention relates to a crosslinkable coating composition comprising

(a) a water-soluble crosslinkable polymeric surfactant having (1) at least one pendant fluorocarbon moiety and (2) at least one pendant ionic moiety which is capable of reacting with a counterion to form a crosslinked polymer, and

(b) a polymeric crosslinking agent having an ionic moiety counterion capable of reacting with the ionic moiety of the surfactant;

to a water-soluble, crosslinkable reactive polymeric surfactant having (1) at least one pendant fluorocarbon moiety and (2) at least one pendant cationic moiety which is capable of reacting with a reactive counterion to form a crosslinked polymer, wherein the cationic moiety is sulfonium or reactive cyclic quaternary ammonium of the following formula

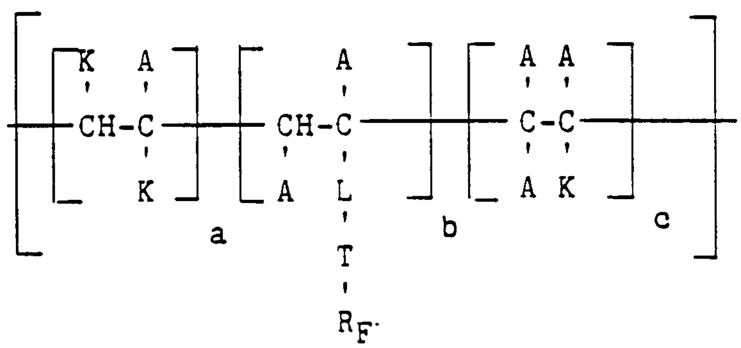

(VII)

where A is hydrogen alkyl, cyclic alkyl, phenyl, aryl or -CN; T is a connecting group; L is a linking group; K is the cationic moiety; $R_F$ is the perfluorocarbon moiety;

and a + b + c = 1; and x = 5 to 1,000; and to a process for preparing a water-soluble, crosslinkable reactive polymeric surfactant having (1) at least one pendant fluorocarbon moiety and (2) at least one pendant cationic moiety which is capable of reacting with a reactive counterion to form a crosslinked polymer which comprises:

polymerizing a fluoroaliphatic vinyl monomer with a vinyl benzyl monomer or vinyl epoxy monomer and converting the resulting polymer to a sulfonium salt by reacting the polymer with an organic sulfide or polymerizing a fluoroaliphatic vinyl monomer with a vinyl sulfonium monomer.

The polymers of this invention are prepared by conventional polymerization methods.

Reactive polymeric surfactants with pendant fluorocarbon moiety, $R_F$, may be prepared by carrying out a polymerization of a reactive vinyl monomer with a FAVM, such as a fluoroaliphatic acrylate (I), fluoroaliphatic methacrylate (II) and vinyl aryl type monomers (III, IV), represented by the formulas:

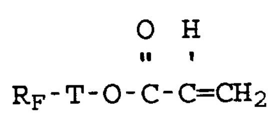

(I)

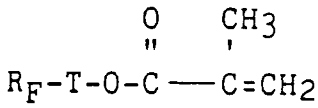

(II)

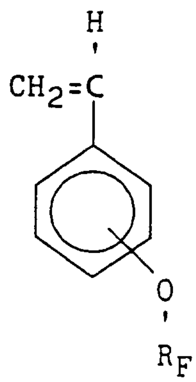

(III)

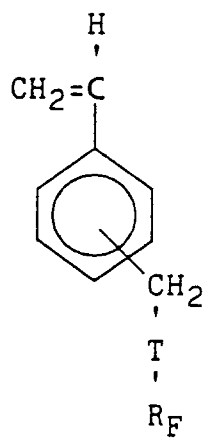

(IV)

The fluorocarbon moiety, $R_F$, must be terminated with at least one $CF_3$ group and contain at least three fully fluorinated carbon atoms which may or may not contain the terminal (furthest removed from the chain) $CF_3$. A perfluorinated $C_nF_{2n+1}$ group where n is 3 to 18 is a preferred $R_F$ group, more preferably n is 4 to 12.

The fluoroaliphatic group of the FAVM is more preferably a saturated, nonaromatic aliphatic radical with at least 3 carbon atoms. The chain may be straight, branched, or if sufficiently large, cyclic. A fully fluorinated group is preferred but hydrogen or chlorine atoms may be present provided that not more than one atom of either is present for every 2 carbon atoms.

A non-interfering hydrocarbon connecting group T is typically present to enhance the chemical and thermal stability of the pendant fluorocarbon moiety group.

T is preferably a divalent hydrocarbon-containing group or an inertly substituted hydrocarbon-containing group wherein the substituents do not deleteriously affect the function of the hydrocarbon group. For example, the T in the formula $R_F$-T may be

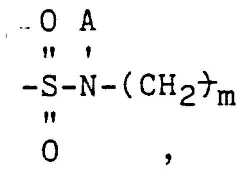
,

$-(CH_2)_m-$,
$-(CH_2)_m S (CH_2)_m-$,

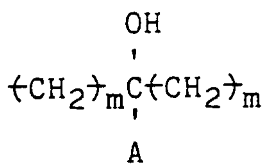
,

where A is H or an alkyl group (1 to 12 carbon atoms) and m = zero to 10.

The $R_F$ or $R_F$-T pendant group is connected to the polymer backbone represented by Ⓟ through a linking group, L.

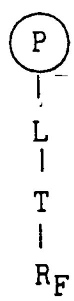

For example, in Formulas I and II above the linking group is

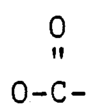
.

The following linking groups, L, are useful in the present invention.

<u>AROMATIC SYSTEMS</u> where

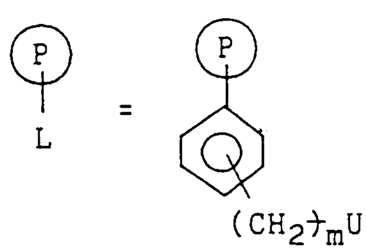

where U is a non-interfering group such as

$$U = -\overset{A}{\overset{|}{N}}\!-\!(CH_2)_m$$

$$= -O\!-\!(CH_2)_m$$

$$= -S\!-\!(CH_2)_m$$

$$= -\overset{O}{\overset{\|}{C}}O\!-\!(CH_2)_m$$

$$= -(CH_2)_m$$

= 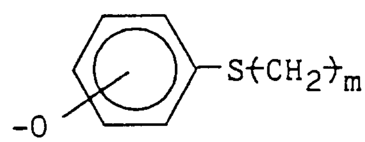

$$= -NH-\overset{O}{\overset{\|}{C}}-O-$$

$$= -O-\overset{O}{\overset{\|}{C}}-O-$$

$$= -\overset{A}{\overset{|}{N}}\!-\!(CH_2)_m O-\overset{O}{\overset{\|}{C}}\!-\!(CH_2)_m S-$$

$$= -O-\overset{O}{\overset{\|}{C}}\!-\!(CH_2)_m$$

wherein m = zero to 10 and A is H or an alkyl group (1 to 12 carbon atoms).

ALIPHATIC SYSTEMS where

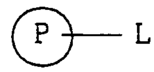

is

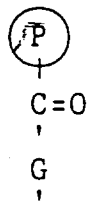

or

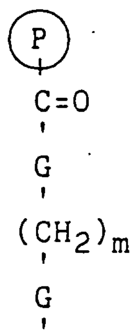

or

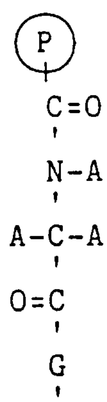

or

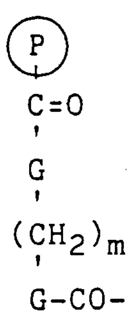

where G is a non-interfering group such as

$$G = -O\!\left(CH_2\right)_m$$

$$= -S\!\left(CH_2\right)_m$$

= 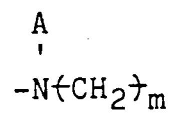

$$= \left(CH_2\right)_m$$

= 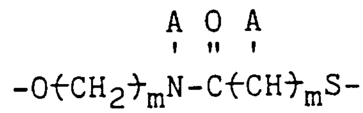

wherein m = zero to 10 and A is H or an alkyl group (1 to 12 carbon atoms).

The fluorocarbon moieties may also be introduced into the polymer by post reaction with a reactive fluorochemical compound. Thus, electrophilic functional groups on the polymer may be reacted with nucleophilic functional fluorocarbon materials. Conversely, electrophilic functional fluorocarbon compounds may be reacted with polymers containing reactive nucleophilic functionality. Pendant fluorocarbon moieties may also be introduced by employing a Michael addition reaction between a polymer-containing pendant double bonds and a reactive nucleophilic fluorocarbon. The double bond may also be attached to the fluorocarbon molecule and be reacted via Michael addition with a polymer containing pendant nucleophilic moieties. Examples of electrophilic functional fluorocarbons are fluorochemical sulfonyl fluoride,

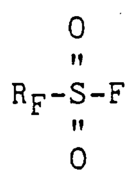

(V)

or sulfonyl chloride

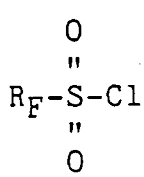

(VI) .

Compounds V and VI may be reacted with polymers containing pendant primary or secondary amines. Amine containing polymers can be conveniently prepared from monomers such as 2-aminoethyl methacrylate or vinylbenzyl amine.

Pendant fluorocarbon groups can also be introduced by reaction of nucleophilic fluorochemical functional amines, $R_F$-T-NHA (where A is H or alkyl), or mercaptants, $R_f$-T-SH, with polymers derived from maleic anhydride or glycidyl methacrylate. The mercapto functional $R_F$ can also react with pendant activated double bonds.

Exemplary of the polymeric surfactant suitable to be used in the crosslinkable coating composition of the present invention is a random polymer having the following formula

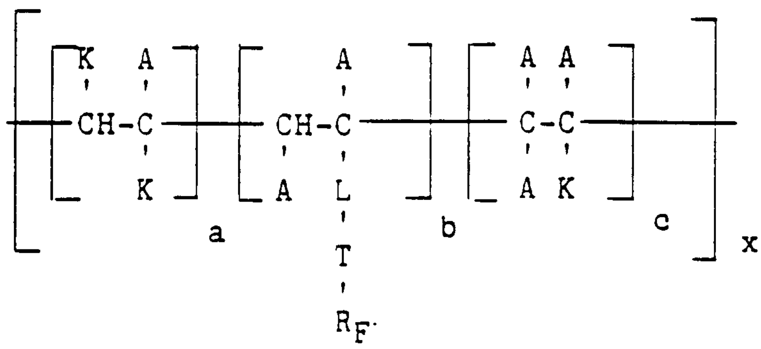

(VII)

wherein A is hydrogen, alkyl ($C_1$ to $C_{18}$), cyclic alkyl, phenyl, aryl, or -CN; T is a connecting group as defined above; L is the linking group defined above; K is the ionic moiety as defined herein; $R_F$ is the perfluorocarbon moiety as defined above; and a + b + c = 1; and x = 5 to 1,000, preferably from 10 to 100. The amount or proportion of b is such that the polymer is water dispersible and there is sufficient ionic groups to afford crosslinking. Preferably, the ratio of a + c to b is from 1 to 13, more preferably 1.5 to 4.

The pendant reactive ionic moiety (K) of the polymeric surfactant is the functionality used to interact with a counterion to produce the crosslinking or curing of the polymer. It may be anionic, cationic, potentially anionic or cationic, or have both cationic and anionic functionalities (zwitterionic).

Reactive anionic functionalities, K, are generated by reaction of carboxy, mercaptan or sulfonamide moieties with bases to obtain the carboxylate mercaptide and sulfonamide salts. At lower pH values, these functionalized polymers of type VII become essentially nonionic, are generally water insoluble, and thus no longer act as surfactants. Examples of anionic moieties, K, include (wherein G is as previously defined)

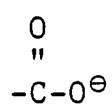 ,

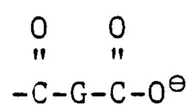 ,

$-G-S^{\ominus}$ ,

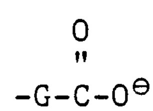

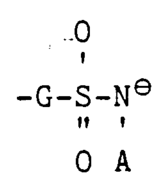 , and

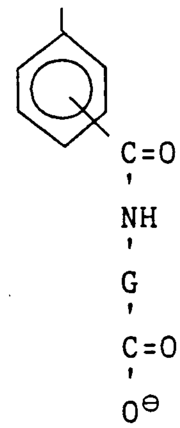

.

The preferred anionic moiety, K, is carboxylate.

Reactive cationic functionalities, K, are not strongly affected by pH and include sulfoniums and reactive cyclic quarternary ammonium moieties. Examples of cationic functionalities are:

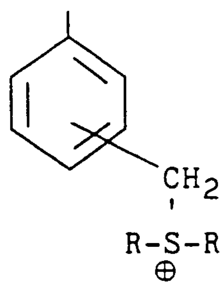

,

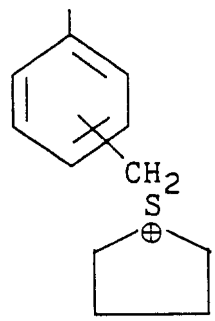

,

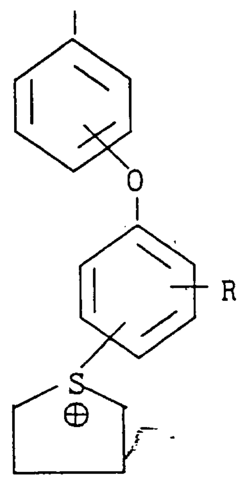

,

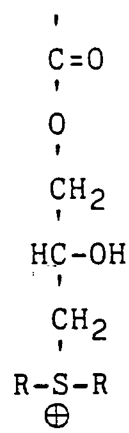

,

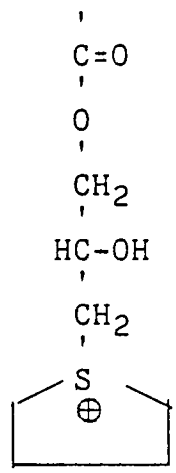

, and

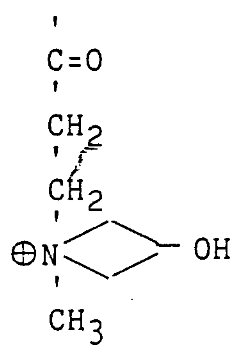

Crosslinking of an anionic reactive polymeric surfactant can be attained by using a reactive cationic or potential cationic external counterion. The counterion can be a polyfunctional cation such as benzylsulfonium, aryl cyclic sulfonium (cf. U.S. Patent 3,903,056) or azetidinium as the $CO_3^{=}$ or $HCO_3^{-}$salt. The carboxylate anionic polymeric surfactant usually is introduced as the ammonium salt. Thus, when the solvent is removed, $NH_3$ is evolved and the resulting carboxy acid functionality reacts with the cationic crosslinking agent to form covalent bonds.

In some cases a co-solvent must sometimes be added if a coacervate is formed. Coacervation means that the anion-cation combination produced an insoluble or nondispersible material. If a cyclic sulfonium zwitterion (cf. U.S. Patent 3,804,797) is used as a crosslinker, coacervation does not take place.

The preferred potentially cationic crosslinking agent for the anionic carboxylate polymeric surfactant is a polyfunctional oxazoline or oxazine. For example, polymers of 2-isopropenyl-2-oxazoline can be formulated with the ammonium salt of a carboxylate anionic polymeric surfactant. With the removal of solvent and ammonia, the oxazoline nitrogen is protonated and the resultant onium-carboxylate ion pair intermediate is converted to an amide-ester crosslink. This is shown by the reaction below.

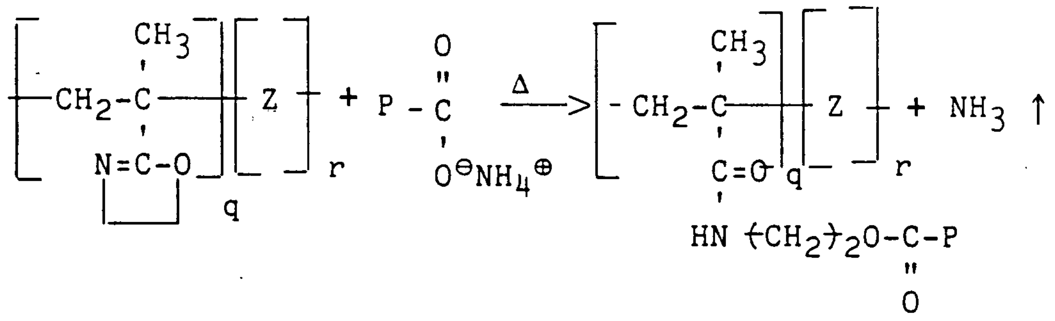

wherein P is a Formula VII polymer where K is $COO^{\ominus}NH_4^{\oplus}$, Z is independently a hydrophilic monomer (such as methacrylic acid), a hydrophobic monomer (such as methyl methacrylate) or a combination thereof, incorporated in an amount which does not interfere with the compatibility of the polymer and the water based system, and q + r = 1. The above example is shown with ammonia but other cations capable of producing a volatile amine can be used.

The polyfunctional oxazoline may be obtained by addition polymerization of an oxazoline monomer represented by the general structure:

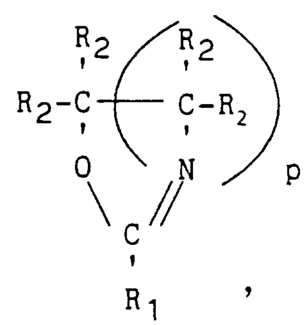

wherein p = 1 or 2, $R_1$ is an acyclic organic radical having addition polymerizable unsaturation. Preferably, $R_1$ is an isopropenyl group. Each $R_2$ is independently hydrogen, halogen or an inertly substituted organic radical, preferably $R_2$ is hydrogen.

A polyfunctional oxazoline may also be represented by the general structure:

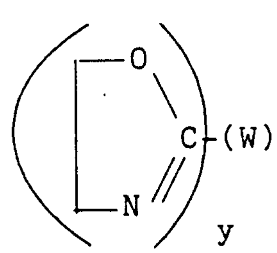

wherein W is a noninterfering hydrocarbon or inertly substituted connecting group having a valance of y.

Polymeric surfactants containing cationic moieties can be prepared by, for example, reacting a perfluorocarbon acrylate compound with a vinylbenzyl chloride to produce a polymeric perfluorocarbon compound which is then functionalized by reacting with dimethyl sulfide to produce the perfluorocarbon-containing polymeric surfactant having a sulfonium ion functionality.

Reactive cationic polymeric surfactants can be crosslinked by nucleophilic anions such as bicarbonate, carbonate and water compatible polyfunctional carboxylate moieties. A polyfunctional carboxylate may be represented by the general structure

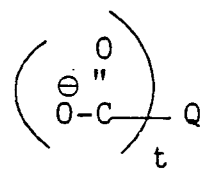

wherein Q is a noninterfering or inertly substituted connecting group having a valence of t. The connecting group Q can contain alkyl, cyclic alkyl, aromatic, ether, ester, amide carbonate, urea or urethane linking groups. Examples of polyfunctional carboxylate crosslinking moieties are:

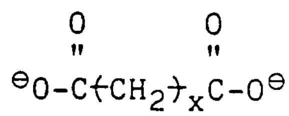
,

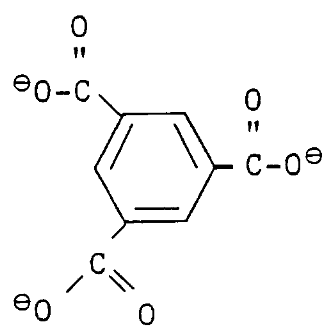
, and

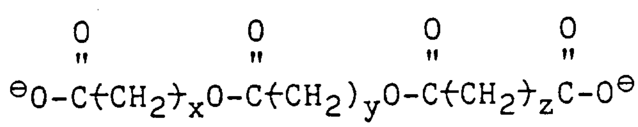
.

wherein x, y and z are each zero to 25.

The polymeric surfactant can also be prepared so as to contain both anionic and cationic pendant functionalities, e.g., a zwitterionic surfactant or so-called inner salt. These are self curing and need no external reactive crosslinking agent.

By using the polymeric surfactants of the present invention, coating compositions are obtained which are water or water-polar solvent based, wettable on most substrates, and curable at comparatively low temperatures, e.g., 50° to 125°C. The resultant crosslinked coatings are uniform, thin, clear, glossy, have comparatively low critical surface tension, are solvent resistant and have excellent adhesion to most substrates.

The following examples are representative of the polymeric surfactants and coating compositions of the present invention.

Example 1 - Preparation of Anionic Polymeric Surfactants

A perfluorocarbon-containing polymeric surfactant was prepared having a pendant carboxylate functionality. Polymerization was carried out in a 250 ml, 3-necked, round bottom flask equipped with an overhead stirrer, condenser, pressure equalizing addition funnel and nitrogen inlet. The reaction flask was charged with 25 g of MEK, stirred, heated to 85°C and purged with nitrogen. To the funnel was added 40 g of a perfluorinated methacrylate compound (Zonyl TM®, made by duPont, after inhibitor removal) and 10 g of methacrylic acid (MAA) along with 5 g additional MEK. The mixture of monomers was added to the

reaction flask at the rate of 3.5 ml per 15 minutes. 1.2 Grams of initiator (Vazo-64, α,α-azobisisobutyronitrile, manufactured by duPont) was added to 12 ml of MEK and the solution was cooled to 0 °C and added at the rate of 1 ml per 15 minutes to the reaction mixture. After the additions were completed, the reaction mixture was held at 85 °C for an additional three hours. The reaction mixture was allowed to cool to ambient temperature and the solvent removed under vacuum leaving a white powder form of a polymer having pendant perfluorocarbon moiety and pendant carboxy functionality. The solid powder was dissolved into an aqueous ammonium hydroxide solution. The residual ammonium hydroxide was removed under vacuum and the polymer dialyzed overnight utilizing Spectro-Por dialysis tubing with a molecular weight cut off of 8,000 (Example 1).

Example 2 - Oxazoline Crosslinker For Anionic Polymeric Surfactants

A sample of Example 1 (0.2 g of a 7.06 percent solids) was made basic by the addition of one drop of concentrated ammonium hydroxide and then admixed with 0.076 g of a 5 percent solids aqueous solution of 2-isopropenyl-2-oxazoline homopolymer. To the mixture was added 0.05 ml of alcohol and 0.6 ml of water. This solution was mixed and applied to glass slides. These coated slides were cured at 125 °C for one hour resulting in clear, colorless, and smooth thin films. The film was analyzed for its critical surface tension of wetting value using a homologous series of seven n-hydrocarbons. The measured critical surface tension of wetting was 131 µN/cm (13.1 dynes/cm).

Other Example 1 coating composition samples were cured at lower curing temperatures. Curing conditions as low as 60 °C for one-half hour were sufficient to cure the composition into a thin, hard, colorless film. Such a 1/2-hour, 60 °C cure gave a coating with a critical surface tension of 13.4 dynes/cm. Essentially the same result was obtained when the same composition was cured at 60 °C for 12 hours (critical surface tension of 135 µN/cm (13.5 dynes/cm)) and one cured at 80 °C for 1/2 hour (critical surface tension of 138 µN/cm (13.8 dynes/cm)).

Other Example 1 coating compositions were made into films in accordance with Example 2 and tested for UV radiation stability. If a film is stable to UV, the change in critical surface tension will be relatively small. A film prepared from Example 1 composition had an initial critical surface tension 138 µN/cm (13.8 dynes/cm). After 1,000 hours of UV radiation exposure using a Weather-o-meter and a Fade-o-meter, the critical surface tension increased only to 160 µN/cm (16.0 dynes/cm) indicating good UV stability.

Example 3

In a similar manner to Example 1, polymeric surfactants were prepared having pendant fluorocarbon moieties and chain-extended carboxylate moieties. For example, a copolymer comprised of 60 weight percent Zonyl TM® (manufactured by duPont) and 40 weight percent Alcolac B-CEA® (a side chain pendent carboxylate compound, sold by Alcolac) was prepared, deprotonated, and formulated with poly-isopropenyloxazoline. This solution was then used in a similar manner to Example 2 to prepare clear, colorless, hard, and smooth thin films. The measured critical surface tension of wetting was 125 µN/cm (12.5 dynes/cm).

Example 4 - Cyclic Sulfonium Zwitterion as Crosslinker For Anionic Polymeric Surfactant

A sample of Example 1 (0.2 g of a 7.06 percent solids) was admixed with 0.0235 g of a 28 percent solids aqueous solution of the cyclic sulfonium zwitterion. To the mixture was added 0.25 ml of isopropanol and 1.0 ml of distilled water. This solution was mixed and applied to glass slides. These coated slides were cured at 125 °C for one hour resulting in clear, colorless, and smooth thin films. The measured critical surface tension of wetting was 129 µN/cm (12.9 dynes/cm).

Examples 5-8 - Anionic Polymeric Surfactants - Oxazoline Crosslinker

In a similar manner to Example 1, polymeric surfactants were prepared having pendant fluorocarbon moieties and carboxylate moieties employing different percentages of the perfluorinated acrylate or methacrylate compound and methacrylic acid. The following table reports the type and relative proportions of the monomers and the resulting critical surface tension of wetting for the resultant coatings which were measured in the same manner as Example 2.

TABLE I

| Example | Perfluorocarbon | Acid | Wilkinson Pencil Hardness Test | Critical Surface Tension (μN/cm) (dynes/cm) |
|---|---|---|---|---|
| 5 | 60 wt. % methacrylate | 40 wt. % MAA | >6H | 160 (16.0) |
| 6 | 90 wt. % methacrylate | 10 wt % MAA | 2H | 145 (14.5) |
| 7 | 80 wt % acrylate | 20 wt % MAA | >6H | 140 (14.0) |
| 8 | 90 wt. % acrylate | 10 wt % MAA | 3H | 129 (12.9) |

Samples of the surfactants of Examples 2, 3, and 5-8 were taken and the surface tension of the polymeric surfactant solutions (without crosslinker) was determined at the critical micelle concentration (CMC). Table II presents the results.

TABLE II

| Example | Perfluorocarbon | Acid | CMC (wt. %) | Surface Tension at CMC (μN/cm) (dynes/cm) |
|---|---|---|---|---|
| 2A | 80 wt. % methacrylate | 20 wt. % MAA | 1.5 | 480 (48) |
| 3A | 60 wt. % methacrylate | 40 wt. % pendant carboxylate | 2.0 | 460 (46) |
| 5A | 60 wt. % methacrylate | 40 wt. % MAA | 2.5 | 540 (54) |
| 6A | 90 wt. % methacrylate | 10 wt. % MAA | >10 | <380 (<38) |
| 7A | 80 wt. % acrylate | 20 wt. % MAA | 0.15 | 370 (37) |
| 8A | 90 wt. % acrylate | 10 wt. % MAA | 0.6 | 300 (30) |

Example 9 - Di-functional Oxazoline as Crosslinker

In a manner the same as Example 2, a coating composition was prepared and tested utilizing the polymeric surfactant of Example 1 and a dioxazoline crosslinker of the following formula:

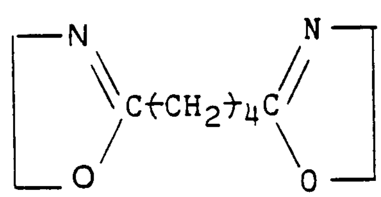

The crosslinker was made in accordance with Witte, H and Seeliger, W; Angew. Chem. International Edition, Vol. 11, No. 4, 1972, p. 287-288.

The resultant cured coating had a critical surface tension of 133μN/cm (13.3 dynes/cm).

Example 10

Preparation of a Reactive Cationic Surfactant Polymer

To a 250 ml, 3-necked, round-bottom flask equipped with a 125 ml pressure equalizing addition funnel, an overhead air-driven stirrer, a condenser, and a nitrogen inlet was added 15 grams (g) of methyl ethyl ketone (MEK). This was stirred and heated to reflux (about 85°C) while the system was under a nitrogen atmosphere. The addition funnel was then charged with a mixture of 30 g of a perfluoroacrylate (FX-189, manufactured by 3-M Company) and 20 g of vinylbenzyl chloride in MEK (5 g), i.e., 60 weight percent perfluoroacrylate and 40 weight percent vinylbenzyl chloride. The monomers were then added to the reaction vessel at the rate of 4 ml per 15 minutes. A solution of initiator (Vazo-64) consisting of 1.2 g in 12 ml of MEK was cooled to 0°C and added to the reaction vessel at the rate of one milliliter per 15 minutes.

Once these additions had been completed the reaction mixture was allowed to continue to stir at 85°C for an additional three hours. During this time an additional amount of MEK (10 g) was added. The reaction mixture was allowed to cool to ambient temperature and the polymer containing solution decanted away from the trace solid polymer residue.

The perfluoroacrylate/vinylbenzyl chloride copolymer (reaction product) was further reacted with dimethyl sulfide. To a 50 ml round-bottom flask equipped with a magnetic stirrer, a condenser, a dry ice condenser and a nitrogen inlet was added 11.3 g of the perfluoroacrylate/vinylbenzyl chloride copolymer as a 45.4 percent solution in MEK and 4.2 g (5 eq.) of dimethyl sulfide. This mixture was further diluted with 10 g of a 1:1 THF/MEK solvent blend and heated to 50°C for 24 hours. During this time, small amounts of water were periodically added (total amount about 3 ml) to increase the polarity of the solvent system. Upon completion of the reaction, the reaction mixture was allowed to cool to ambient temperature and the excess solvent removed in vacuo. To the solid product was added a 33 percent acetone/67 percent water (by volume) solvent system. The mixture was stirred for one hour resulting in a clear tan solution of the sulfonium chloride salt of the perfluorocarbon-containing polymer (Example 10).

Preparation of Coatings From the Reactive Cationic Surfactant Polymer

The solution of Example 10 was then loaded into a column packed with bicarbonate anionic exchange resin and the bicarbonate salt was formed from the chloride salt to introduce the counterion crosslinking agent.

The bicarbonate form of the polymeric surfactant of Example 10 was briefly subjected to reduced pressure to remove the organic solvents and then dialyzed for 24 hours utilizing Spectro-Por dialysis tubing with a molecular weight cut off of 8,000. A 3.3 percent aqueous solution of this polymeric surfactant was applied to a clean glass slide. The coated slide was then allowed to cure at 125°C for 45 minutes to crosslink the coating. The resulting thin film was clear, colorless and smooth. The film was analyzed for its critical surface tension of wetting. Using a homologous series of seven N-hydrocarbons, the critical surface tension value measured 136μN/cm (13.6 dynes/cm).

Examples 11-12 - Preparation of Cationic Polymeric Surfactant Coatings

In the same manner as Example 10, samples were prepared from a 50 weight percent perfluoroacrylate (FX-189, made by 3M) and 50 weight percent vinylbenzyl chloride (Example 11) and a 50 weight percent perfluoronated methacrylate (Zonyl TM made by duPont, after the inhibitor was removed) and 50 weight percent vinylbenzyl chloride (Example 12). The coatings had the same physical characteristics and a critical surface tension of wetting 136 μN/cm (13.6 dynes/cm) (Example 11) and 13.2 dynes/cm (Example 12).

Examples 13-14 - Crosslinking Agents For Cationic Polymeric Surfactants

The sulfonium chloride salt perfluorocarbon-containing polymeric surfactant of Example 10 was reacted with malonic acid (Example 13) and a long-chain difunctional acid (Empol® 1010 dimer acid made by Emery Corporation) (Example 14) to incorporate the counterion crosslinking agent. The resulting coating compositions were applied to clean glass slides and cured in the same manner as Example 10. The crosslinked coatings were clear, colorless and smooth. The critical surface tension of wetting for both coatings was 138μN/cm (13.8 dynes/cm).

Example 15 - Preparation of the Zwitterionic Terpolymer

A perfluorocarbon-containing zwitterionic terpolymer was prepared having pendant carboxylate and sulfonium functionality. Polymerization was carried out in a 250 ml, 3-necked round bottomed flask equipped with an overhead stirrer, condenser, pressure equalizing addition funnel and nitrogen inlet. The reaction flask was charged with 65 g of MEK, stirred, heated to 85°C and placed under a nitrogen atmosphere. To the funnel was added 25 g of a perfluorinated methacrylate compound (Zonyl TM, made by duPont, inhibitor free), 9 g of methacrylic acid (MAA) and 16 g of vinylbenzyl chloride (VBC) along with 60 g of additional MEK. The mixture of monomers was added to the reaction flask at the rate of 9 ml per 15 minutes. 1.2 Grams of initiator (Vazo-64) was added to 20 g of MEK, the resulting solution cooled to 0°C and then was added to the reaction flask at the rate of 2 ml per 15 minutes. After the additions were complete, the reaction mixture was held at 85°C for an additional 2.5 hours. The reaction mixture was allowed to cool to ambient temperatures resulting in a yellow solution, 176 g, 21.3 percent solids.

This solution, 40 g was placed into a 500 ml bottle and 60 g of THF was added as well as 5.2 g (4 equivalents) of dimethyl sulfide. The mixture was stirred and heated to 45 ° C while small amounts of water were being introduced (about 100 ml total) over the 24 hour period. The organic solvents were removed under vacuum to obtain 100 ml of an aqueous solution. A portion of this solution (10 ml) was diluted with 50 ml of methanol and stirred with bicarbonate ion exchange resin. The resulting cloudy solution was treated with a small chunk of dry ice and the solution became clear. The ion exchange resin was then removed by filtration.

The resulting zwitterionic terpolymer solution was then applied onto glass slides and the coatings cured at 125 ° C for one hour. The resulting thin films were clear, colorless, and smooth. They possessed a critical surface tension of wetting value of 156 μN/cm (15.6 dynes/cm).

## Claims

**1.** A crosslinkable coating composition comprising
(a) a water-soluble crosslinkable polymeric surfactant having (1) at least one pendant fluorocarbon moiety and (2) at least one pendant ionic moiety which is capable of reacting with a counterion to form a crosslinked polymer, and
(b) a polymeric crosslinking agent having an ionic moiety counterion capable of reacting with the ionic moiety of the surfactant.

**2.** A coating composition as claimd in claim 1 wherein the crosslinking agent is polyisopropenyloxazoline.

**3.** A water-soluble, crosslinkable reactive polymeric surfactant having (1) at least one pendant fluorocarbon moiety and (2) at least one pendant cationic moiety which is capable of reacting with a reactive counterion to form a crosslinked polymer, wherein the cationic moiety is sulfonium or reactive cyclic quaternary ammonium of the following formula

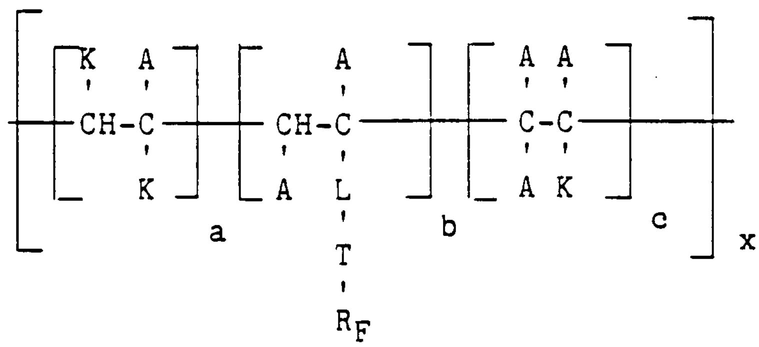

(VII)

where A is hydrogen alkyl, cyclic alkyl, phenyl, aryl or -CN; T is a connecting group; L is a linking group; K is the cationic moiety; $R_F$ is the perfluorocarbon moiety; and a + b + c = 1; and x = 5 to 1,000.

**4.** A polymeric surfactant as claimed in claim 3, wherein the fluorocarbon moiety is represented by the formula $C_nF_{2n+1}$ wherein n = 3 to 18.

**5.** A polymeric surfactant as claimed in claim 3 wherein T is a divalent hydrocarbon-containing group.

**6.** A process for preparing a water-soluble, crosslinkable reactive polymeric surfactant having (1) at least one pendant fluorocarbon moiety and (2) at least one pendant cationic moiety which is capable of reacting with a reactive counterion to form a crosslinked polymer which comprises:

polymerizing a fluoroaliphatic vinyl monomer with a vinyl benzyl monomer or vinyl epoxy monomer and converting the resulting polymer to a sulfonium salt by reacting the polymer with an organic sulfide or polymerizing a fluoroaliphatic vinyl monomer with a vinyl sulfonium monomer.

## Patentansprüche

1. Vernetzbare Beschichtungszusammensetzung, welche umfaßt:
(a) ein wasserlösliches, vernetzbares, polymeres oberflächenaktives Mittel mit (1) mindestens einem angefügten Fluorkohlenstoff-Rest und (2) mindestens einem angefügten ionischen Rest, der zur Reaktion mit einem Gegenion unter Bildung eines vernetzten Polymers befähigt ist, und
(b) ein polymeres Vernetzungsmittel mit einem ionischen Rest eines Gegenions, der zur Reaktion mit dem ionischen Rest des oberflächenaktiven Mittels befähigt ist.

2. Beschichtungszusammensetzung nach Anspruch 1, worin das Vernetzungsmittel Polyisopropenyloxazolin ist.

3. Wasserlösliches, vernetzbares, reaktives polymeres oberflächenaktives Mittel mit (1) mindestens einem angefügten Fluorkohlenstoff-Rest und (2) mindestens einem angefügten kationischen Rest, der zur Reaktion mit einem reaktiven Gegenion unter Bildung eines vernetzten Polymers befähigt ist, worin der kationische Rest Sulfonium oder ein reaktives cyclisches quaternäres Ammonium der folgenden Formel ist:

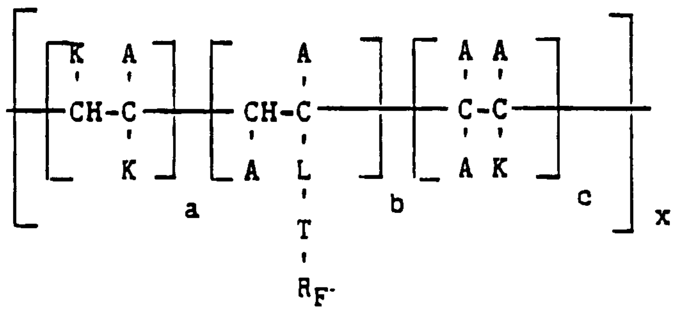

(VII)

worin A Wasserstoff, Alkyl, cyclisches Alkyl, Phenyl, Aryl oder -CN ist, T eine Verbindungsgruppe ist, L eine verknüpfende Gruppe ist, K der kationische Rest ist, $R_F$ der Perfluorkohlenstoff-Rest ist, und a + b + c = 1 und X = 5 bis 1000.

4. Polymeres oberflächenaktives Mittel nach Anspruch 3, worin der Fluorkohlenstoff-Rest durch die Formel $C_nF_{2n+1}$, worin n = 3 bis 18, dargestellt ist.

5. Polymeres oberflächenaktives Mittel nach Anspruch 3, worin T eine divalente Kohlenwasserstoff-enthaltende Gruppe ist.

6. Verfahren zur Herstellung eines wasserlöslichen, vernetzbaren reaktiven polymeren obeflächenaktiven Mittels mit (1) mindestens einem angefügten Fluorkohlenstoff-Rest und (2) mindestens einem angefügten kationischen Rest, der zur Reaktion mit einem reaktiven Gegenion unter Bildung eines vernetzten Polymers befähigt ist, welches umfaßt,
ein fluoraliphatisches Vinylmonomer mit einem Vinylbenzylmonomeren oder einem Vinylepoxy-Monomeren zu polymerisieren und das so erhaltene Polymer in ein Sulfoniumsalz umzuwandeln, indem das Polymer mit einem organischen Sulfid umgesetzt wird oder ein fluoraliphatisches Vinylmonomer mit einem Vinylsulfoniummonomer polymerisiert wird.

## Revendications

1. Composition de revêtement réticulable comprenant
(a) un agent tensioactif polymère hydrosoluble réticulable possédant (1) au moins un groupe latéral fluorocarboné et (2) au moins un groupe latéral ionique capable de réagir avec un contre-ion pour former un polymère réticulé, et
(b) un agent de réticulation comportant un groupe ionique de charge opposée (contre-ion) capable de réagir avec le motif ionique de l'agent tensioactif.

**2.** Composition de revêtement conforme à la revendication 1 dans laquelle l'agent de réticulation est la polyisopropényloxazoline.

**3.** Agent tensioactif polymère hydrosoluble réactif réticulable possédant (1) au moins un motif latéral fluorocarboné et (2) au moins un motif latéral cationique capable de réagir avec un contre-ion réactif pour former un polymère réticulé, dans lequel le motif cationique est un groupe sulfonium ou ammonium quaternaire cyclique réactif, répondant à la formule suivante :

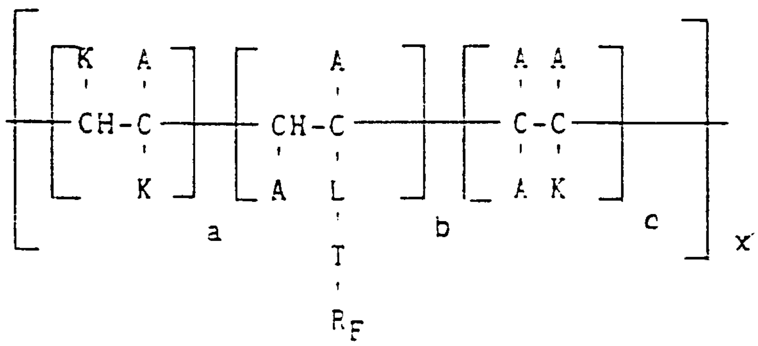

(VII)

dans laquelle A représente un atome d'hydrogène, un groupe alkyle, alkyle cyclique, phényle, aryle ou -CN, T représente un groupe de connexion, L un groupe de liaison, K représente le groupe cationique, $R_f$ représente le groupe perfluorocarboné, a + b + c = 1 et x = 5 à 1000.

**4.** Agent tensioactif polymère conforme à la revendication 3 dans lequel le groupe fluorocarboné est représenté par la formule $C_nF_{2n+1}$, où n = 3 à 18.

**5.** Agent tensioactif polymère conforme à la revendication 3 dans lequel T est un radical divalent contenant des séquences hydrocarbonées.

**6.** Procédé de préparation d'un agent tensioactif polymère hydrosoluble réactif réticulable possédant (1) au moins un groupe latéral fluorocarboné et (2) au moins un groupe latéral cationique capable de réagir avec un contre-ion réactif pour former un polymère réticulé, lequel procédé comprend les étapes consistant :

à polymériser un monomère fluoroaliphatique-vinylique et un monomère benzyl-vinylique ou époxy-vinylique et à convertir le polymère obtenu en un sel de sulfonium en le faisant réagir avec un sulfure organique ou à polymériser un monomère fluoroaliphatique-vinylique avec un monomère de type vinylsulfonium.